# EUROPÄISCHE PATENTSCHRIFT

(11) **EP 2 755 750 B1**
(45) Veröffentlichungstag und Bekanntmachung des Hinweises auf die Patenterteilung: **07.06.2023**
(21) Anmeldenummer: 12762565.5
(22) Anmeldetag: 12.09.2012
(51) Int. Cl.: B01J 19/26, B01J 4/00, C10G 9/14, C10G 11/05, B01J 8/00, B01J 8/08

(54) **SYSTEM UND VERFAHREN ZUM SPALTEN VON KOHLENWASSERSTOFFKETTEN**
SYSTEM AND METHOD FOR CRACKING HYDROCARBON CHAINS
SYSTÈME ET PROCÉDÉ DE DISSOCIATION DE CHAÎNES HYDROCARBONÉES

(30) Priorität: 13.09.2011 DE 102011082616
(43) Veröffentlichungstag der Anmeldung: 23.07.2014
(73) Patentinhaber: GymaTec GmbH, 42107 Wuppertal (DE)
(72) Erfinder: HORTER, Christian, 90455 Nürnberg (DE)
(74) Vertreter: Rau, Schneck & Hübner Patentanwälte Rechtsanwälte PartGmbB
(86) Internationale Anmeldenummer: PCT/EP2012/067755
(87) Internationale Veröffentlichungsnummer: WO 2013/037787

(56) Entgegenhaltungen:
- WO-A2-00/61275
- JP-A- 2002 187 953
- US-A1- 2009 266 741

## Beschreibung

Die Erfindung betrifft ein System mit einer Vorrichtung zum Spalten von Kohlenwasserstoffketten. Die Erfindung ist außerdem auf ein Verfahren zum Spalten von Kohlenwasserstoffketten gerichtet.

Aus dem Stand der Technik sind verschiedene Vorrichtungen zum Spalten von Kohlenwasserstoffketten bekannt. Kohlenwasserstoffketten enthaltendes Material wird dabei im Allgemeinen durch Heizspiralen oder Heizmanschetten in entsprechenden Behältern erhitzt, um dessen Kohlenwasserstoffketten aufzubrechen. Nachteilig an diesen Vorrichtungen ist, dass sich Koks, Ruß oder dergleichen an den Heizspiralen, Heizmanschetten bzw. Behälterwänden der Vorrichtungen absetzt. Ein Aufheizen des Kohlenwasserstoffketten enthaltenden Materials wird dann immer langwieriger und letztendlich nahezu unmöglich. Die sich absetzenden Stoffe verhindern nämlich die Zufuhr thermischer Energie zu dem Kohlenwasserstoffketten enthaltenden Material, die für den Spaltvorgang notwendig ist. Auch ein Rührwerk in Verbindung mit mindestens einer Pumpe verhindert im Allgemeinen nicht die Absetzung der angegebenen Stoffe. Ferner setzt sich auch eingesetztes Katalysatormaterial zu, sodass dieses letztendlich keine bzw. kaum Wirkung mehr entfaltet. Aus der US 2009/0266741 A1, die den nächsten Stand der Technik bildet, sind Düsenreaktorsysteme zum Erhöhen der Umwandlungsrate von Kohlenwasserstoffquellen in leichtere Kohlenwasserstoffverbindungen bekannt. Spaltmaterial wird axial über einen Kanal in einen Reaktorraum eingeführt. Das Spaltmaterial kann überhitzten Dampf oder Kohlendioxid umfassen. Ein Materialzufuhrkanal mündet seitlich in den Reaktorraum. Über den Materialzufuhrkanal können schwere Kohlenwasserstoffverbindungen zugeführt werden.

Die JP 2002187953 A offenbart verschiedene Systeme zum Erzeugen von Flüssigkeiten mit fein verteilten Partikeln. Die Flüssigkeiten können beispielsweise Alkohole sein, während die Partikel organische Polymere sein können. Die Flüssigkeit mit den Partikeln wird mittels einer Pumpe durch ein Rohrleitungssystem gefördert und gelangt dann über zwei im Wesentlichen einander gegenüberliegenden Düsen in einen Mischraum, in dem die aus den Düsen austretenden Teilströme aufeinandertreffen. Die in den Teilströmen enthaltenen Partikel wurden vorher unterschiedlich elektrostatisch aufgeladen, so dass die unterschiedlich geladenen Partikel beim Aufeinandertreffen der Teilströme aneinander haften.

Aus der WO 00/61275 A2 ist eine Vorrichtung zur Durchführung chemischer und physikalischer Prozesse bekannt. Mindestens zwei flüssige Medien werden über eine Hochdruckpumpe durch jeweils eine Düse in einen von einem Reaktorgehäuse umschlossenen Reaktorraum auf einen gemeinsamen Kollisionspunkt gespritzt. Über eine Öffnung wird ein Fluid zur Aufrechterhaltung einer Gasatmosphäre in dem Reaktorinneren bzw. zur Kühlung der entstehenden Produkte eingeleitet. Die entstehenden Produkte und überschüssiges Gas werden über eine weitere Öffnung aus dem Reaktorgehäuse abgeführt. In den Flüssigkeiten gelöste, emulgierte oder dispergierte Reagenzien homogenisieren oder reagieren dabei chemisch oder physikalisch zu dem gewünschten Endprodukt.

Der Erfindung liegt daher die Aufgabe zugrunde, ein System mit einer Vorrichtung zum Spalten von Kohlenwasserstoffketten bereitzustellen, die eine äußerst homogene und stetige Erhitzung der Kohlenwasserstoffketten ermöglicht. Ferner soll die Vorrichtung äußerst wirtschaftlich und zuverlässig im Betrieb sein. Ein entsprechendes Verfahren soll ebenfalls geschaffen werden.

Diese Aufgabe wird erfindungsgemäß durch die in den unabhängigen Ansprüchen 1 und 9 angegebenen Merkmale gelöst.

Der Kern der Erfindung liegt darin, dass eine Erhitzungs-Strömungseinrichtung vorgesehen ist, die mindestens zwei Teilströme des Kohlenwasserstoffketten enthaltenden Fluids aufeinandertreffen lässt, wobei sich das Kohlenwasserstoffketten enthaltende Fluid erwärmt und die Kohlenwasserstoffketten des Fluids mindestens teilweise gespalten werden. Die Erhitzung des Fluids ist wichtig für die Schwächung der Bindung der Kohlenwasserstoffketten und das Separieren von Bestandteilen des Kohlenwasserstoffketten enthaltenden Fluids. Das Aufeinandertreffen der Fluid-Teilströme fördert das Aufspalten. Die Kohlenwasserstoffketten sind so durch die Erhitzungs-Strömungseinrichtung äußerst einfach und wirtschaftlich spaltbar.

Die einander gegenüberliegende Anordnung der Austrittöffnungen, sodass die aus den Austrittsöffnungen austretenden Teilströme des Fluids in dem Behälterraum frontal aufeinander treffen, führt zu einer besonders hohen Umwandlung kinetischer Energie in thermische Energie. Die Teilströme strömen so quasi stromaufwärts des Auftreffpunkts auf einer gemeinsamen Geraden. Es ist von Vorteil, wenn im Auftreffpunkt der Teilströme ein gleichmäßiger Fluid-Strömungsteller entsteht.

Je kürzer die Kohlenwasserstoffketten sind, desto weniger Energie ist für eine Aggregatsänderung des Fluids im Allgemeinen notwendig.

Durch die Vorrichtung sind langkettige Kohlenwasserstoffketten und/oder kurzkettige Kohlenwasserstoffketten erhältlich. Langkettige Kohlenwasserstoffe befinden sich beispielsweise in Schwerölen bzw. schwerem Heizöl. Kurzkettige Kohlenwasserstoffe befinden sich beispielsweise in Benzin, Diesel, leichtem Heizöl und Alkanen, wie Methan, Ethan, Propan und Butan. Die kurzkettigen Kohlenwasserstoffketten sind aus den langkettigen Kohlenwasserstoffketten erhältlich.

Inaktives Katalysatormaterial ist außerdem durch die Erhitzungs-Strömungseinrichtung freispülbar und wieder aktivierbar, was hauptsächlich auf die auftretende Stoßenergie bei dem Aufeinandertreffen der Teilströme des Fluids zurückzuführen ist. Das Katalysatormaterial wird so stets gereinigt und quasi wiederaufbereitet.

Es ist von Vorteil, wenn die erste und/oder zweite Austrittsöffnung im Querschnitt kreisförmig ist. Andere Formen sind auch möglich. Es ist zweckmäßig, wenn die Austrittsöffnungen eine identische Querschnittsform und Querschnittsfläche haben. Vorzugsweise hat die erste und/oder zweite Austrittsöffnung eine Querschnittsfläche zwischen 50 mm² und 400 mm², vorzugsweise zwischen 150 mm² und 250 mm².

Der Begriff "Fluid" wird hier für Gase, Flüssigkeiten und Gas-Flüssigkeits-Gemische verwendet. Das Fluid enthält vorzugsweise Kunststoffmaterial, Öle und/oder Fette. Bei den Ölen handelt es sich beispielsweise um biologische, mineralische und/oder Abfallöle. Die Flüssigkeiten können dünnflüssig oder dickflüssig sein. Es können auch Flüssigkeiten Anwendung finden, die bei Abkühlung zu Feststoffen erstarren bzw. im abgekühlten Zustand fest sind.

Zur Förderung des Fluids aus dem Behälter zu den Austrittsöffnungen ist mindestens eine Förderpumpe vorgesehen. Die Förderpumpe ist vorzugsweise eine Kolben- bzw. Doppelkolbenpumpe. Andere Hochdruck-Pumpen sind aber ebenfalls einsetzbar.

Das Fluid ist in einem Rohrleitungssystem aus dem Behälter zu den Austrittsöffnungen geführt. Das Rohrleitungssystem ist aus Rohrleitungen gebildet.

Weitere vorteilhafte Ausgestaltungen der Erfindung sind in den Unteransprüchen angegeben. Insbesondere ist das Verfahren gemäß der Ansprüche 9 bis 15 mit den Merkmalen der Ansprüche 2 bis 8 weiterbildbar.

Die Ausführung nach Anspruch 2 ermöglicht ein besonders starkes Ausdampfen des Fluids bei dem Auftreffpunkt bzw. dem Strömungsteller der Teilströme. Es ist von Vorteil, wenn der Winkel zwischen den Teilströmen und einer Horizontalen zwischen 15° und 75°, bevorzugter zwischen 30° und 60° liegt. Am Bevorzugtesten liegt der Winkel zwischen 40° und 50°. Gemäß alternativen Ausführungsformen sind die aus den Austrittsöffnungen austretenden Teilströme vertikal oder horizontal orientiert.

Die Ausgestaltung nach Anspruch 3 erlaubt eine äußerst hohe Strömungsgeschwindigkeit des Fluids an der ersten und/oder zweiten Austrittsöffnung. Ferner ist diese Vorrichtung besonders funktionssicher und kostengünstig. Durch die Strömungsdüse wird nämlich Druck in kinetische Energie umgewandelt. Die Strömungsdüse kann sich bereichsweise oder über ihre gesamte Länge verjüngen. Vorzugsweise reduziert sich bei der Strömungsdüse die Strömungs-Querschnittsfläche zwischen 40 % und 95 %, vorzugsweise zwischen 60 % und 85 %. Es ist zweckmäßig, wenn die Austrittsöffnung direkt stromabwärts an der Strömungsdüse vorgesehen ist.

Nach Anspruch 4 ist der Druck des ersten und/oder zweiten Teilstroms einstellbar. Die Einstellung des Drucks kann manuell oder automatisch erfolgen. Zur manuellen Einstellung des Drucks kann beispielsweise mindestens ein entsprechendes Einstellventil und/oder eine Förderpumpe herangezogen werden. Vorzugsweise ist das mindestens eine Einstellventil in dem Rohrleitungssystem zwischen der ersten und/oder zweiten Austrittsöffnung und einer Förderpumpe zur Förderung des Fluids zu den Austrittsöffnungen vorgesehen.

Die Einstellung der Strömungsgeschwindigkeit nach Anspruch 5 kann beispielsweise wieder durch mindestens ein Einstellventil und/oder eine Förderpumpe erfolgen. Vorzugsweise ist das mindestens eine Einstellventil in dem Rohrleitungssystem zwischen der ersten und/oder zweiten Austrittsöffnung und der Förderpumpe zur Förderung des Fluids zu den Austrittsöffnungen vorgesehen.

Die Ausgestaltung nach Anspruch 7 verhindert eine ungewollte Ablagerung von Feststoffen des Fluids bzw. von eingesetztem Katalysatormaterial. Der Behälter weist in dem Konusbereich eine entsprechende Abführschräge auf, die mit der Horizontalen einen Winkel zwischen 20° und 70°, bevorzugter zwischen 30° und 60°, einschließt. Die Feststoffe bzw. das Katalysatormaterial rutschen an der Abführschräge entlang und werden über die Fluid-Abführöffnung einfach aus dem Behälter abgeführt. Ansammlungen am Boden des Behälters können so verhindert werden. Es ist von Vorteil, wenn sich der Behälter zu der Fluid-Abführöffnung hin trichterförmig bzw. konisch verjüngt.

Nach Anspruch 10 ist Katalysatormaterial vorgesehen. Dieses vereinfacht das Spalten der Kohlenwasserstoffketten bzw. die Erhitzung des Kohlenwasserstoffketten enthaltenden Fluids. Als Katalysatormaterial kommen vorzugsweise Zeolithe zum Einsatz, die vorteilhafterweise als Granulat vorliegen. Es ist von Vorteil, wenn die eingesetzten Zeolithe Natrium- bzw. Natriumkationen enthalten. Ein entsprechendes Katalysatormaterial wird von der Tricat Zeolites GmbH unter der Bezeichnung "Katalysator 407" vertrieben. Andere Katalysatormaterialien, wie Na-Katalysatoren, können ebenfalls Anwendung finden. Das Katalysatormaterial ist nicht zwingend für das Spalten der Kohlenwasserstoffketten erforderlich.

Die Ausführung nach Anspruch 11 führt dazu, dass die Teilströme einen besonders gleichmäßigen Fluid-Strömungsteller bilden. Ferner wird so verhindert, dass sich die Teilströme gegenseitig verschieben. Es wird so beispielsweise unterbunden, dass der eine Teilstrom beispielsweise den Auftreffpunkt zwischen den Teilströmen in eine Austrittsöffnung hineinschiebt, was unvorteilhaft wäre.

In Anspruch 12 sind bevorzugte Druckbereiche angegeben.

Es ist zweckmäßig, wenn die Teilströme des Fluids bei den Austrittsöffnungen einen identischen Volumenstrom, eine identische Strömungsgeschwindigkeit und/oder einen identischen Druck haben.

In Anspruch 14 sind vorteilhafte Temperaturbereiche des Fluids in dem Behälter angegeben. Bei einem Temperaturbereich von 100 °C bis 150 °C entstehen in dem Behälter vor allem Gase, insbesondere Alkane. Bei einer Temperatur von mehr als 250 °C entsteht bzw. verdampft in dem Behälter insbesondere Benzin bzw. ein Dieselgemisch. Bei etwa 340 °C entsteht bzw. verdampft in dem Behälter insbesondere Schweröl.

Eine Kombination der Gegenstände nach den unabhängigen Ansprüchen 1 und 9 miteinander sowie der Gegenstände der auf diese rückbezogenen Unteransprüche ist möglich. Eine Kombination eines unabhängigen Anspruchs mit einem Unteranspruch bzw. Unteransprüchen eines anderen unabhängigen Anspruchs ist möglich.

Nachfolgend werden unter Bezugnahme auf die beigefügte Zeichnung bevorzugte Ausführungsformen der Erfindung beispielhaft beschrieben. Dabei zeigen:
- Fig. 1: eine schematische Ansicht eines erfindungsgemäßen Systems zum Spalten von Kohlenwasserstoffketten, bei dem die Erhitzungs-Strömungseinrichtung gegenüber einer Horizontalen geneigt ist,
- Fig. 2: eine schematische Ansicht eines erfindungsgemäßen Systems zum Spalten von Kohlenwasserstoffketten, bei dem die Erhitzungs-Strömungseinrichtung vertikal orientiert ist, und
- Fig. 3: eine schematische Ansicht eines erfindungsgemäßen Systems zum Spalten von Kohlenwasserstoffketten, bei dem die Erhitzungs-Strömungseinrichtung horizontal orientiert ist.

Auch Einzelheiten der im Folgenden näher erläuterten Ausführungsformen können für sich genommen eine Erfindung darstellen oder Teil eines Erfindungsgegenstandes sein.

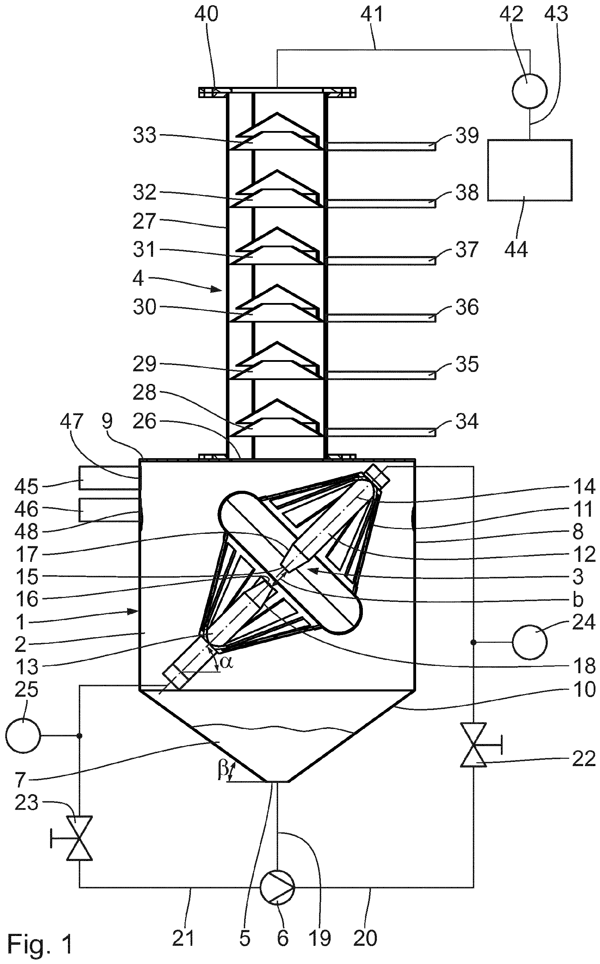

Bezug nehmend auf Fig. 1 umfasst ein System zum Spalten von Kohlenwasserstoffketten einen Behälter 1, der einen Behälterraum 2 aufweist. In dem Behälterraum 2 ist eine Erhitzungs-Strömungseinrichtung 3 angeordnet, die zum Erhitzen eines Fluids 7 in dem Behälterraum 2 dient. Oberhalb des Behälters 1 befindet sich eine Destilliereinrichtung 4, die mit dem Behälterraum 2 in Fluidverbindung steht. Der Behälter 1 hat eine untere Fluid-Abführöffnung 5. Über die Fluid-Abführöffnung 5 pumpt eine Förderpumpe 6 das in dem Behälterraum 2 befindliche, Kohlenwasserstoffketten enthaltende Fluid 7 zu der Erhitzungs-Strömungseinrichtung 3, die das Fluid 7 erhitzt. In der Erhitzungs-Strömungseinrichtung 3 stoßen zwei Teilströme des Fluids 7 beschleunigt frontal zusammen, wodurch das Fluid 7 erhitzt wird. Das erhitzte, dampfförmige Fluid 7 gelangt dann in die Destilliereinrichtung 4, wo es kondensiert und Produkte mit aufgespalteten Kohlenwasserstoffketten gewonnen werden.

Der Behälter 1 weist eine Behälterwand 8 auf, die in Umfangsrichtung geschlossen ist und den Behälterraum 2 nach seitlich außen begrenzt. An die Behälterwand 8 grenzt oben eine Behälterdecke 9 an, die den Behälterraum 2 nach oben abschließt. Nach unten ist der Behälterraum 2 durch einen Behälterboden 10 verschlossen, der gegenüberliegend zu dem Behälterdeckel 9 angeordnet ist. Der Behälterboden 10 ist trichterartig ausgebildet. Im Zentrum des Behälterbodens 10 befindet sich die Fluid-Abführöffnung 5. Der Behälterboden 10 verläuft so von der Behälterwand 8 zu der Fluid-Abführöffnung 5 nach schräg unten. Er schließt mit einer Horizontalen einen Winkel *β* ein. Die Fluid-Abführöffnung 5 befindet sich so an dem tiefsten Punkt des Behälterbodens 10. Es ist von Vorteil, wenn die Behälterwand 8 im Querschnitt ringförmig ausgebildet ist und die Behälterdecke 9 sowie der Behälterboden 10 jeweils in der Draufsicht kreisförmig sind.

Die Erhitzungs-Strömungseinrichtung 3 ist in dem Behälterraum 2 über eine Trageinrichtung 11 fixiert. Die Erhitzungs-Strömungseinrichtung 3 umfasst zwei Rohrstücke 12, 13, die im Querschnitt kreisringförmig ausgebildet sind und sich entlang einer gemeinsamen Geraden 14 erstrecken. Die Gerade 14 ist mit einem Winkel α gegenüber einer Horizontalen geneigt, der 45° beträgt. Die Trageinrichtung 11 legt die Rohrstücke 12, 13 örtlich fest, sodass diese unbeweglich zueinander und dem Behälterraum 2 sind. Vorzugsweise sind die Rohrstücke 12, 13 identisch ausgeführt.

Jedes Rohrstück 12, 13 hat eine erste bzw. zweite Austrittsöffnung 15, 16. Die Austrittsöffnungen 15, 16 liegen in dem Behälterraum 2 einander gegenüber und haben einen Abstand b zueinander, der zwischen 2 cm und 10 cm, bevorzugter zwischen 3 cm und 7 cm, liegt.

Die Rohrstücke 12, 13 haben jeweils endseitig eine Strömungsdüse 17 bzw. 18, die sich an die jeweilige Austrittsöffnung 15 bzw. 16 anschließt. In der Strömungsdüse 17, 18 verjüngt sich jeweils der Querschnitt des Rohrstücks 12 bzw. 13 in Strömungsrichtung des Fluids 7. Die Rohrstücke 12, 13 haben jeweils einen Durchmesser, der bei 30 mm liegt. Die Austrittsöffnungen 15, 16 an den stromabwärtigen Enden der Strömungsdüsen 17, 18 haben jeweils einen Durchmesser, der 15 mm beträgt.

An die Fluid-Abführöffnung 5 ist eine Rohrleitung 19 angeschlossen, die an einen Fluideingang der Förderpumpe 6 angeschlossen ist. Die Förderpumpe 6 hat außerdem zwei Fluidausgänge. An jeden Fluidausgang ist eine Rohrleitung 20 bzw. 21 angeschlossen. Die Rohrleitung 20 ist an das Rohrstück 12 angeschlossen, während die Rohrleitung 21 an das Rohrstück 13 angeschlossen ist. Die Rohrleitungen 20, 21 sind jeweils an die den Austrittsöffnungen 15, 16 gegenüberliegenden Enden der Rohrstücke 12, 13 angeschlossen. In jeder Rohrleitung 20, 21 befinden sich ein Einstellventil 22 bzw. 23 und ein Manometer 24 bzw. 25. Die Einstellventile 22, 23 und die Manometer 24, 25 sind stromabwärts zu der Förderpumpe 6 angeordnet. Vorzugsweise haben die Rohrleitungen 20, 21 einen identischen Strömungsquerschnitt und eine identische Querschnittsform.

Die Destilliereinrichtung 4 ist als Destillierkolonne ausgebildet. In der Behälterdecke 9 ist eine Durchgangsöffnung 26 ausgebildet. Die Destilliereinrichtung 4 ist auf den Behälter 1 aufgesetzt und steht über die Durchgangsöffnung 26 mit dem Behälterraum 2 in Fluidverbindung. Sie hat eine Wandung 27, die umfangseitig geschlossen ist und mit ihrem Fußbereich auf die Behälterdecke 9 aufgesetzt ist. Die Wandung 27 umläuft dabei die Durchgangsöffnung 26 in der Behälterdecke 9.

In der Destilliereinrichtung 4 sind mehrere Trennböden 28 bis 33 übereinander angeordnet, die unterschiedliche Abstände zu dem Behälter 1 aufweisen. Der Trennboden 28 ist am nächsten zu dem Behälter 1 vorgesehen, während der Trennboden 33 den größten Abstand zu dem Behälter 1 hat. Die Trennböden 28 bis 33 sind vorzugsweise jeweils identisch ausgebildet und erstrecken sich zwischen der Wandung 27. Die Trennnböden 28 bis 33 haben jeweils mindestens eine Fluiddurchtrittsöffnung. Mit jedem Trennboden 28 bis 33 ist eine Abführleitung 34 bis 39 verbunden.

Die Destilliereinrichtung 4 hat ferner einen Deckel 40, der gegenüberliegend zu dem Behälter 1 angeordnet ist und die Destilliereinrichtung 4 nach oben abschließt. Der Deckel 40 wird von einer Rohrleitung 41 durchsetzt, die in einen Kondensator 42 mündet. Der Kondensator 42 steht über eine Rohrleitung 43 mit einem nachgeordneten Sammelbehältnis 44 in Strömungsverbindung.

An den Behälter 1 ist ferner eine Zuführleitung 45 zur Zuführung von Katalysatormaterial angeschlossen. Eine Zuführleitung 46 zur Zuführung von weiteren Kohlenwasserstoffketten enthaltenden Fluid ist ebenfalls an den Behälter 1 angeschlossen. Die Zuführleitungen 45, 46 stehen über jeweilige Zuführöffnungen 47 bzw. 48 mit dem Behälterraum 2 in Verbindung.

Nachfolgend wird die Funktion des Systems bzw. das Verfahren näher beschrieben. In dem Behälterraum 2 befindet sich das Kohlenwasserstoffketten enthaltende Fluid 7, das hier ein Öl bzw. Ölgemisch ist. In dem Fluid 7 befindet sich auch Katalysatormaterial. Das Fluid 7 gelangt mit dem Katalysatormaterial über die Fluid-Abführöffnung 5 und die Rohrleitung 19 in die Förderpumpe 6, die das Fluid 7 kontinuierlich fördert. Es wird dann durch die Förderpumpe 6 in den Rohrleitungen 20 bzw. 21 zu der Erhitzungs-Strömungseinrichtung 3 gefördert. Das Fluid 7 wird also auf die Rohrleitungen 20, 21 aufgeteilt, sodass in diesen Teilströme des Fluids 7 strömen. Das Fluid 7 verlässt dann die Rohrleitungen 20 bzw. 21 und tritt in die Rohrstücke 12 bzw. 13 ein. In den Rohrstücken 12, 13 strömt das Fluid 7 beschleunigt aufeinander zu, wobei es in den Strömungsdüsen 17 bzw. 18 weiter stark beschleunigt wird. Das Fluid 7 verlässt dann die Rohrstücke 12 bzw. 13 über die Austrittsöffnungen 15 bzw. 16 und hat dort eine äußerst hohe Geschwindigkeit. In den Rohrstücken 12 bzw. 13 ist das Fluid 7 geführt. Nach Verlassen der Rohrstücke 12 bzw. 13 ist das Fluid 7 quasi ungeführt bzw. frei. Das aus den Rohrstücken 12 bzw. 13 austretende Fluid 7 prallt dann in etwa mittig zwischen den Austrittsöffnungen 15 bzw. 16 frontal aufeinander. Die Erhitzungs-Strömungseinrichtung 3 bildet somit quasi eine Gegenstrahleinrichtung. Beim Auftreffpunkt entsteht ein Fluid-Strömungsteller. Der Fluid-Strömungsteller liegt im Wesentlichen in einer Ebene, die sich im Wesentlichen senkrecht zu der Geraden 14 erstreckt.

Das Fluid 7 hat im Auftreffpunkt eine Temperatur von etwa 500 °C. Durch das Aufeinandertreffen der Teilströme wird das Fluid 7 erhitzt, wobei sich die Kohlenwasserstoffketten in dem Fluid 7 aufspalten. Der Behälter 1 bildet demnach einen Reaktor. Ein endothermes Verfahren liegt vor.

Das Fluid 7 hat bei den Manometern 24, 25 einen Druck, der zwischen 5 bar und 120 bar, vorzugsweise zwischen 10 bar und 80 bar, bevorzugter zwischen 15 bar und 60 bar, liegt.

Die Erhitzungs-Strömungseinrichtung 3 heizt das Fluid 7 auf, führt dem Spaltprozess die notwendige Energie zu und hält das Katalysatormaterial aktiv. Je höher die Auftreffgeschwindigkeit der beiden Teilströme aufeinander ist, desto höher ist im Allgemeinen die erzeugte thermische Energie. Durch das wiederholte Aufeinandertreffen der Teilströme wird das Katalysatormaterial quasi auch freigespült. Durch das Erhitzen erfolgt eine Schwächung der Bindungskraft zwischen den Molekülen des Kohlenwasserstoffketten enthaltenden Fluids 7.

Wenn das Fluid 7 eine ausreichende Temperatur hat und in Dampfform vorliegt, verlässt es über die Durchgangsöffnung 26 den Behälterraum 2 und gelangt von unten in die Destilliereinrichtung 4. Das Fluid 7 kann durch die Fluiddurchtrittsöffnungen in der Destilliereinrichtung 4 in Richtung auf den Deckel 40 strömen. Es kondensiert an den Trennböden 28 bis 33. Bei dem Trennboden 28 liegt dann Schweröl vor, während über die Rohrleitung 41 Gas zu dem Kondensator 42 geführt wird. Das Gas wird dann in dem Sammelbehältnis 44 aufgefangen. Über die Abführleitungen 34 bis 39 werden die gewonnenen Produkte abgeführt, wobei die Länge der Kohlenwasserstoffketten der Produkte von unten nach oben in Richtung auf den Deckel 40 abnimmt.

Nicht in die Destilliereinrichtung 4 gelangendes Fluid 7 sammelt sich unten in dem Behälter 1 und wird dann wieder zu den Austrittsöffnungen 15, 16 gepumpt. Das Verfahren wird in einem Kreislaufsystem betrieben.

Weiteres bzw. neues Katalysatormaterial kann über die Zuführleitung 45 in den Behälterraum 2 eingebracht werden. Weiteres bzw. neues Kohlenwasserstoffketten enthaltendes Material kann über die Zuführleitung 46 in den Behälterraum 2 eingebracht werden.

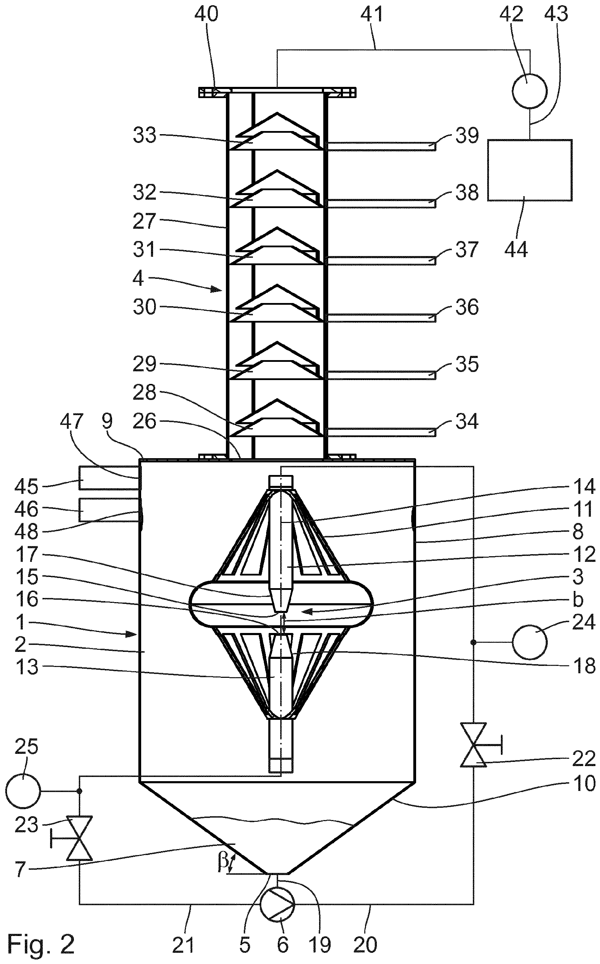

Nachfolgend wird unter Bezugnahme auf die Figur 2 eine zweite bevorzugte Ausführungsform der Erfindung beschrieben. Im Gegensatz zu der vorherigen Ausführungsform ist hier die Erhitzungs-Strömungseinrichtung 3 gedreht in dem Behälterraum 2 angeordnet. Die Rohrstücke 12, 13 sind dabei so angeordnet, dass sie sich vertikal erstrecken. Es wird so ein Strömungsteller im Betrieb geschaffen, der im Wesentlichen horizontal verläuft.

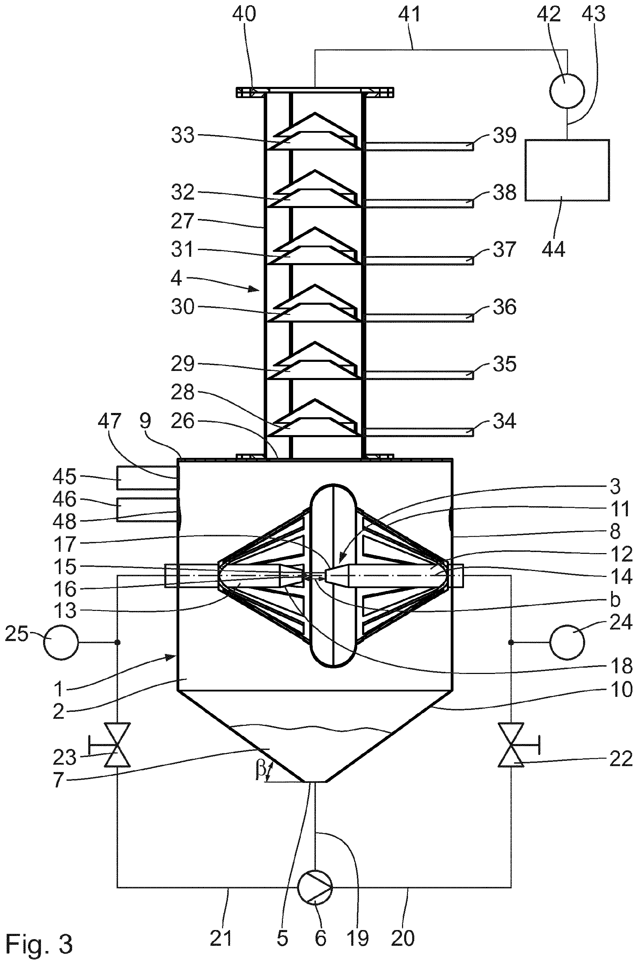

Bezug nehmend auf Figur 3 wird eine dritte Ausführungsform der Erfindung beschrieben. Hier ist die Erhitzungs-Strömungseinrichtung 3 so in dem Behälterraum 2 gedreht, dass die Rohrstücke 12, 13 horizontal verlaufen. Der im Betrieb entstehende Strömungsteller erstreckt sich demnach vertikal.

## Patentansprüche

1. System zum Spalten von Kohlenwasserstoffketten, umfassend
a) eine Vorrichtung zum Spalten von Kohlenwasserstoffketten, umfassend
i) einen Behälter (1) mit einem Behälterraum (2) zur Aufnahme eines Kohlenwasserstoffketten enthaltenden Fluids (7), und
ii) eine Erhitzungs-Strömungseinrichtung (3) zum Erhitzen des Fluids (7) in dem Behälterraum (2),
- wobei die Erhitzungs-Strömungseinrichtung (3) eine erste Austrittsöffnung (15) für den Austritt eines ersten Teilstroms des Fluids (7) aufweist, und
b) eine sich an den Behälter (1) anschließende Destilliereinrichtung (4) zum Destillieren des durch die Erhitzungs-Strömungseinrichtung (3) erhitzten Fluids (7),
**dadurch gekennzeichnet, dass**
c) die Erhitzungs-Strömungseinrichtung (3) eine zweite Austrittsöffnung (16) für den Austritt eines zweiten Teilstroms des Fluids (7) aufweist,
d) die erste und zweite Austrittsöffnung (15, 16) einander gegenüberliegen, sodass die aus den Austrittsöffnungen (15, 16) austretenden Teilströme des Fluids (7) in dem Behälterraum (2) frontal aufeinander treffen und sich dabei durch Umwandlung ihrer kinetischen Energie in thermische Energie erhitzen,
e) die Erhitzungs-Strömungseinrichtung (3) die Teilströme des Fluids (7) so stark in dem Behälterraum (2) erhitzt, dass sich die Kohlenwasserstoffketten des Fluids (7) mindestens teilweise in dem Behälterraum (2) spalten,
f) das System mindestens eine Förderpumpe (6) zum Fördern des sich in dem Behälter (1) befindenden Fluids (7) zu den Austrittsöffnungen (15, 16) umfasst, und
g) das System ein Rohrleitungssystem zum Führen des Fluids (7) aus dem Behälter (1) zu den Austrittsöffnungen (15, 16) umfasst,
h) wobei sich nicht in die Destilliereinrichtung (4) gelangendes Fluid (7) unten in dem Behälter (1) sammelt und die mindestens eine Förderpumpe (6) das Fluid (7) dann wieder zu den Austrittsöffnungen (15, 16) pumpt.

2. System nach Anspruch 1, **dadurch gekennzeichnet, dass** die aus den Austrittsöffnungen (15, 16) austretenden Teilströme des Fluids (7) gegenüber einer Horizontalen geneigt sind.

3. System nach einem der vorherigen Ansprüche, **dadurch gekennzeichnet, dass** die erste und/oder zweite Austrittsöffnung (15, 16) stromabwärts an einer Strömungsdüse (17, 18) vorgesehen sind/ist.

4. System nach einem der vorherigen Ansprüche, **dadurch gekennzeichnet, dass** der Druck des ersten und/oder zweiten Teilstroms des Fluids (7) in dem zu der ersten und/oder zweiten Austrittsöffnung (15, 16) führenden Rohrleitungssystem einstellbar ist.

5. System nach einem der vorherigen Ansprüche, **dadurch gekennzeichnet, dass** die Strömungsgeschwindigkeit des ersten und/oder zweiten Teilstroms des Fluids (7) in dem zu der ersten und/oder zweiten Austrittsöffnung (15, 16) führenden Rohrleitungssystem einstellbar ist.

6. System nach einem der vorherigen Ansprüche, **dadurch gekennzeichnet, dass** zwischen den Austrittsöffnungen (15, 16) ein Abstand b vorliegt, der zwischen 2 cm und 10 cm, bevorzugter zwischen 3 cm und 7 cm, liegt.

7. System nach einem der vorherigen Ansprüche, **dadurch gekennzeichnet, dass** der Behälter (1) eine untere Fluid-Abführöffnung (5) zur Abführung des Fluids (7) aus dem Behälter (1) aufweist, wobei sich der Behälter (1) zu der Fluid-Abführöffnung (5) hin zumindest bereichsweise konisch verjüngt.

8. System nach einem der vorherigen Ansprüche, **dadurch gekennzeichnet, dass** der Behälter (1) mindestens eine Zuführöffnung (47, 48) zur Zuführung von Katalysatormaterial und/oder von weiteren Kohlenwasserstoffketten enthaltendem Fluid bzw. Material umfasst.

9. Verfahren zum Spalten von Kohlenwasserstoffketten, umfassend die Schritte:
- Erhitzen eines sich in einem Behälterraum (2) eines Behälters (1) befindenden, Kohlenwasserstoffketten enthaltenden Fluids (7) durch eine Erhitzungs-Strömungseinrichtung (3), die eine erste Austrittsöffnung (15) für den Austritt eines ersten Teilstroms des Fluids (7) und eine zweite Austrittsöffnung (16) für den Austritt eines zweiten Teilstroms des Fluids (7) aufweist, wobei die Austrittsöffnungen (15, 16) einander gegenüberliegen,
- Fördern des sich in dem Behälter (1) befindenden Fluids (7) mittels mindestens einer Förderpumpe (6) zu den Austrittsöffnungen (15, 16),
- Führen des Fluids (7) aus dem Behälter (1) zu den Austrittsöffnungen (15, 16) mittels eines Rohrleitungssystems,
- frontales Aufeinandertreffen lassen der aus der ersten und zweiten Austrittsöffnung (15, 16) austretenden Teilströme in dem Behälterraum (2), wobei sich die Teilströme des Fluids (7) durch Umwandlung ihrer kinetischen Energie in thermische Energie in dem Behälterraum (2) derart erhitzen, dass sich die Kohlenwasserstoffketten des Fluids (7) in dem Behälterraum (2) mindestens teilweise spalten, und
- Destillieren des durch die Erhitzungs-Strömungseinrichtung (3) erhitzten Fluids (7) in einer sich an den Behälter (1) anschließenden Destilliereinrichtung (4),
- wobei sich nicht in die Destilliereinrichtung (4) gelangendes Fluid (7) unten in dem Behälter (1) sammelt und die mindestens eine Förderpumpe (6) das Fluid (7) dann wieder zu den Austrittsöffnungen (15, 16) pumpt.

10. Verfahren nach Anspruch 9, **dadurch gekennzeichnet, dass** in den Behälter (1) Katalysatormaterial eingebracht wird.

11. Verfahren nach Anspruch 9 oder 10, **dadurch gekennzeichnet, dass** der Druck des ersten Teilstroms und zweiten Teilstroms des Fluids (7) in dem zu den Austrittsöffnungen (15, 16) führenden Rohrleitungssystem im Wesentlichen gleich ist und die Teilströme des Fluids (7) in dem Rohrleitungssystem einen im Wesentlichen identischen Volumenstrom haben.

12. Verfahren nach einem der Ansprüche 9 bis 11, **dadurch gekennzeichnet, dass** der Druck des ersten Teilstroms und/oder zweiten Teilstroms des Fluids (7) in dem zu der ersten und/oder zweiten Austrittsöffnung (15, 16) führenden Rohrleitungssystem zwischen 5 bar und 120 bar, vorzugsweise zwischen 10 bar und 80 bar, bevorzugter zwischen 15 bar und 60 bar, liegt.

13. Verfahren nach einem der Ansprüche 9 bis 12, **dadurch gekennzeichnet, dass** die Strömungsgeschwindigkeit des ersten und zweiten Teilstroms des Fluids (7) in dem zu den Austrittsöffnungen (15, 16) führenden Rohrleitungssystem im Wesentlichen gleich ist.

14. Verfahren nach einem der Ansprüche 9 bis 13, **dadurch gekennzeichnet, dass** das sich in dem Behälter (1) befindende Fluid (7) eine Temperatur zwischen 80 °C und 400 °C, vorzugsweise zwischen 100 °C und 350 °C, bevorzugter zwischen 250 °C und 330 °C, hat.

15. Verfahren nach einem der Ansprüche 9 bis 14, **dadurch gekennzeichnet, dass** das Fluid (7) Katalysatormaterial zum katalytischen Spalten des Kohlenwasserstoffketten enthaltenden Fluids (7) enthält.

## Claims

1. System for cleaving hydrocarbon chains, comprising
a) a device for cleaving hydrocarbon chains, comprising
i) a container (1) with a container space (2) for receiving a fluid (7) containing hydrocarbon chains, and
ii) a heating flow device (3) for heating the fluid (7) in the container space (2),
- wherein the heating flow device (3) has a first outlet opening (15) for the outlet of a first partial flow of the fluid (7), and
b) a distillation device (4) adjoining the container (1) for distilling the fluid (7) heated by the heating flow device (3),
**characterized in that**
c) the heating flow device (3) has a second outlet opening (16) for the outlet of a second partial flow of the fluid (7),
d) the first and second outlet openings (15, 16) are opposite each other so that the partial flows of the fluid (7) emerging from the outlet openings (15, 16) meet each other head-on in the container space (2) and thereby heat up by converting their kinetic energy into thermal energy,
e) the heating flow device (3) heats the partial flows of the fluid (7) in the container space (2) to such an extent that the hydrocarbon chains of the fluid (7) split at least partially in the container space (2),
f) the system comprises at least one conveyor pump (6) for conveying the fluid (7) in the container (1) to the outlet openings (15, 16), and
g) the system comprises a piping system for guiding the fluid (7) from the container (1) to the outlet openings (15, 16),
h) wherein fluid (7) not entering the distillation device (4) gathers at the bottom of the container (1) and the at least one conveyor pump (6) then pumps the fluid (7) back to the outlet openings (15, 16).

2. System according to claim 1, **characterized in that** the partial flows of the fluid (7) emerging from the outlet openings (15, 16) are inclined with respect to a horizontal.

3. System according to any one of the preceding claims, **characterized in that** the first and/or second outlet opening (15, 16) is/are provided downstream on a flow nozzle (17, 18).

4. System according to any one of the preceding claims, **characterized in that** the pressure of the first and/or second partial flow of the fluid (7) in the piping system leading to the first and/or second outlet opening (15, 16) is adjustable.

5. System according to any one of the preceding claims, **characterized in that** the flow speed of the first and/or second partial flow of the fluid (7) in the piping system leading to the first and/or second outlet opening (15, 16) is adjustable.

6. System according to any one of the preceding claims, **characterized in that** there is a distance b between the outlet openings (15, 16) which is between 2 cm and 10 cm, more preferably between 3 cm and 7 cm.

7. System according to any one of the preceding claims, **characterized in that** the container (1) has a lower fluid discharge opening (5) for discharging the fluid (7) from the container (1), wherein the container (1) tapers conically towards the fluid discharge opening (5) at least in some regions.

8. System according to any one of the preceding claims, **characterized in that** the container (1) comprises at least one feed opening (47, 48) for feeding catalyst material and/or fluid or material containing further hydrocarbon chains.

9. Method for cleaving hydrocarbon chains, comprising the steps of:
- heating a fluid (7) containing hydrocarbon chains that is located in a container space (2) of a container (1) by means of a heating flow device (3) which has a first outlet opening (15) for the outlet of a first partial flow of the fluid (7) and a second outlet opening (16) for the outlet of a second partial flow of the fluid (7), wherein the outlet openings (15, 16) are opposite one another,
- conveying the fluid (7) in the container (1) by means of at least one conveyor pump (6) to the outlet openings (15, 16),
- guiding the fluid (7) from the container (1) to the outlet openings (15, 16) by means of a piping system,
- allowing the partial flows emerging from the first and second outlet openings (15, 16) to meet head-on in the container space (2), wherein the partial flows of the fluid (7) heat up by converting their kinetic energy into thermal energy in the container space (2) in such a manner that the hydrocarbon chains of the fluid (7) at least partially split in the container space (2), and
- distilling the fluid (7) heated by the heating flow device (3) in a distillation device (4) adjoining the container (1),
- wherein fluid (7) not reaching the distillation device (4) gathers at the bottom of the container (1) and the at least one conveyor pump (6) then pumps the fluid (7) back to the outlet openings (15, 16).

10. Method according to claim 9, **characterized in that** catalyst material is introduced into the container (1).

11. Method according to claim 9 or 10, **characterized in that** the pressure of the first partial flow and second partial flow of the fluid (7) in the piping system leading to the outlet openings (15, 16) is substantially equal and the partial flows of the fluid (7) in the piping system have a substantially identical volume flow.

12. Method according to any one of claims 9 to 11, **characterized in that** the pressure of the first partial flow and/or second partial flow of the fluid (7) in the piping system leading to the first and/or second outlet opening (15, 16) is between 5 bar and 120 bar, preferably between 10 bar and 80 bar, more preferably between 15 bar and 60 bar.

13. Method according to any one of claims 9 to 12, **characterized in that** the flow speed of the first and second partial flows of the fluid (7) in the piping system leading to the outlet openings (15, 16) is substantially equal.

14. Method according to any one of claims 9 to 13, **characterized in that** the fluid (7) located in the container (1) has a temperature between 80 °C and 400 °C, preferably between 100 °C and 350 °C, more preferably between 250 °C and 330 °C.

15. Method according to any one of claims 9 to 14, **characterized in that** the fluid (7) contains catalyst material for catalytic cracking of the fluid (7) containing hydrocarbon chains.

## Revendications

1. Système pour le clivage de chaînes d'hydrocarbures, comprenant
a) un dispositif pour le clivage des chaînes d'hydrocarbures, comprenant
i) un récipient (1) avec un espace de récipient (2) pour recevoir un fluide (7) contenant des chaînes d'hydrocarbures, et
ii) un dispositif d'écoulement de chauffage (3) pour chauffer le fluide (7) dans l'espace de récipient (2),
- dans lequel le dispositif d'écoulement de chauffage (3) présente un premier orifice de sortie (15) pour la sortie d'un premier flux partiel du fluide (7), et
b) un dispositif de distillation (4) se raccordant au récipient (1) pour distiller le fluide (7) chauffé par le dispositif d'écoulement de chauffage (3),
**caractérisé en ce que**
c) le dispositif d'écoulement de chauffage (3) présente un deuxième orifice de sortie (16) pour la sortie d'un deuxième flux partiel du fluide (7),
d) les premier et deuxième orifices de sortie (15, 16) sont opposés l'un à l'autre, de sorte que les flux partiels du fluide (7) sortant des orifices de sortie (15, 16) se rencontrent frontalement dans l'espace du récipient (2) et s'échauffent alors par conversion de leur énergie cinétique en énergie thermique,
e) le dispositif d'écoulement de chauffage (3) chauffe les flux partiels du fluide (7) dans l'espace de récipient (2) de telle manière que les chaînes d'hydrocarbures du fluide (7) se divisent au moins partiellement dans l'espace de récipient (2),
f) le système comprend au moins une pompe de transport (6) pour acheminer le fluide (7) se trouvant dans le récipient (1) vers les orifices de sortie (15, 16), et
g) le système comprend un système de tuyauterie pour guider le fluide (7) depuis le récipient (1) vers les orifices de sortie (15, 16),
h) le fluide (7) qui ne parvient pas dans le dispositif de distillation (4) s'accumulant en bas dans le récipient (1) et ladite au moins une pompe de transport (6) pompant alors à nouveau le fluide (7) vers les orifices de sortie (15, 16).

2. Système selon la revendication 1, **caractérisé en ce que** les flux partiels du fluide (7) sortant des orifices de sortie (15, 16) sont inclinés par rapport à une horizontale.

3. Système selon l'une quelconque des revendications précédentes, **caractérisé en ce que** le premier et/ou le deuxième orifice de sortie (15, 16) sont/est prévu(s) en aval sur une buse d'écoulement (17, 18).

4. Système selon l'une quelconque des revendications précédentes, **caractérisé en ce que** la pression du premier et/ou du deuxième flux partiel du fluide (7) est réglable dans le système de tuyauterie menant au premier et/ou au deuxième orifice de sortie (15, 16).

5. Système selon l'une quelconque des revendications précédentes, **caractérisé en ce que** la vitesse d'écoulement du premier et/ou du deuxième flux partiel du fluide (7) dans le système de tuyauterie menant au premier et/ou au deuxième orifice de sortie (15, 16) est réglable.

6. Système selon l'une quelconque des revendications précédentes, **caractérisé en ce qu'**il existe entre les orifices de sortie (15, 16) une distance b qui est comprise entre 2 cm et 10 cm, de préférence entre 3 cm et 7 cm.

7. Système selon l'une quelconque des revendications précédentes, **caractérisé en ce que** le récipient (1) présente un orifice inférieur d'évacuation de fluide (5) pour l'évacuation du fluide (7) hors du récipient (1), le récipient (1) se rétrécissant de manière conique au moins par zones en direction de l'orifice d'évacuation de fluide (5).

8. Système selon l'une quelconque des revendications précédentes, **caractérisé en ce que** le récipient (1) comprend au moins un orifice d'alimentation (47, 48) pour l'alimentation en matériau catalyseur et/ou en fluide ou matériau contenant d'autres chaînes d'hydrocarbures.

9. Procédé de clivage de chaînes d'hydrocarbures, comprenant les étapes suivantes :
- chauffage d'un fluide (7) contenant des chaînes d'hydrocarbures se trouvant dans un espace (2) d'un récipient (1) par un dispositif d'écoulement de chauffage (3) qui présente un premier orifice de sortie (15) pour la sortie d'un premier flux partiel du fluide (7) et un deuxième orifice de sortie (16) pour la sortie d'un deuxième flux partiel du fluide (7), les orifices de sortie (15, 16) étant opposés l'un à l'autre,
- le transport du fluide (7) se trouvant dans le récipient (1) au moyen d'au moins une pompe de transport (6) vers les orifices de sortie (15, 16),
- guidage du fluide (7) du récipient (1) vers les orifices de sortie (15, 16) au moyen d'un système de tuyauterie,
- faire se rencontrer frontalement les flux partiels sortant des premier et deuxième orifices de sortie (15, 16) dans l'espace de récipient (2), les flux partiels du fluide (7) s'échauffant par conversion de leur énergie cinétique en énergie thermique dans l'espace de récipient (2) de telle sorte que les chaînes d'hydrocarbures du fluide (7) se divisent au moins partiellement dans l'espace de récipient (2), et
- distillation du fluide (7) chauffé par le dispositif d'écoulement de chauffage (3) dans un dispositif de distillation (4) se raccordant au récipient (1),
- dans lequel le fluide (7) qui ne parvient pas dans le dispositif de distillation (4) s'accumule en bas dans le récipient (1) et l'au moins une pompe de transport (6) pompe ensuite à nouveau le fluide (7) vers les orifices de sortie (15, 16).

10. Procédé selon la revendication 9, **caractérisé en ce qu'**un matériau catalyseur est introduit dans le récipient (1).

11. Procédé selon la revendication 9 ou 10, **caractérisé en ce que** la pression du premier flux partiel et du deuxième flux partiel du fluide (7) dans le système de tuyauterie menant aux orifices de sortie (15, 16) est sensiblement identique et les flux partiels du fluide (7) dans le système de tuyauterie ont un débit volumétrique sensiblement identique.

12. Procédé selon l'une quelconque des revendications 9 à 11, **caractérisé en ce que** la pression du premier flux partiel et/ou du deuxième flux partiel du fluide (7) dans le système de tuyauterie menant au premier et/ou au deuxième orifice de sortie (15, 16) est comprise entre 5 bars et 120 bars, de préférence entre 10 bars et 80 bars, plus préférentiellement entre 15 bars et 60 bars.

13. Procédé selon l'une quelconque des revendications 9 à 12, **caractérisé en ce que** la vitesse d'écoulement des premier et deuxième flux partiels du fluide (7) dans le système de tuyauterie menant aux orifices de sortie (15, 16) est sensiblement identique.

14. Procédé selon l'une quelconque des revendications 9 à 13, **caractérisé en ce que** le fluide (7) se trouvant dans le réservoir (1) a une température comprise entre 80°C et 400°C, de préférence entre 100°C et 350°C, plus préférentiellement entre 250°C et 330°C.

15. Procédé selon l'une quelconque des revendications 9 à 14, **caractérisé en ce que** le fluide (7) contient un matériau catalyseur pour le clivage catalytique du fluide (7) contenant des chaînes hydrocarbonées.
